# EUROPEAN PATENT SPECIFICATION

(11) **EP 4 393 672 B1**
(45) Date of publication and mention of the grant of the patent: **07.10.2026**
(21) Application number: 23866594.7
(22) Date of filing: 18.05.2023
(51) Int. Cl.: B29B 17/02, C08J 11/02

(54) **ADDITIVE REMOVAL METHOD USING AN APPARATUS**
VERFAHREN ZUR ENTFERNUNG VON ZUSATZSTOFFEN MIT EINER VORRICHTUNG
PROCÉDÉ D'ÉLIMINATION D'ADDITIF UTILISANT UN APPAREIL

(30) Priority: 27.10.2022 KR 20220140595
(43) Date of publication of application: 03.07.2024
(73) Proprietor: LG CHEM, LTD., Yeongdeungpo-gu Seoul 07336 (KR)
(72) Inventor: KIM, Jun Sik, Daejeon 34122 (KR); PARK, Jong Suh, Daejeon 34122 (KR); OH, Hyun Taek, Daejeon 34122 (KR); LEE, Sang Ho, Daejeon 34122 (KR); KIM, Do Dam, Daejeon 34122 (KR); KANG, Jue Hyung, Daejeon 34122 (KR); RYU, Jin Sook, Daejeon 34122 (KR); CHA, Seon Cheol, Daejeon 34122 (KR)
(74) Representative: Goddar, Heinz J.
(86) International application number: PCT/KR2023/006793
(87) International publication number: WO 2024/090696

(56) References cited:
- JP-A- 2006 009 033
- JP-A- 2006 009 033
- JP-A- 2007 146 176
- JP-A- H1 045 941
- JP-B2- 4 350 756
- KR-A- 20070 109 317
- KR-A- 20200 105 317

## Description

### [Technical Field]

The present invention relates to a method for removal of an additive using an additive removal apparatus.

### [Background Art]

Recently, as resin materials having physical properties required for various uses and purposes have been developed, the use of polymer materials such as resins or plastics is increasing. In general, the resins or plastics use a lot of energy from extraction of crude oil to manufacturing, and a large amount of carbon is emitted in the process. Furthermore, when the resins or plastics contained in the product are also discarded along with the disposal of the final product, environmental pollution is caused and social costs for the treatment of the environmental pollution are consumed. Accordingly, recycling of discarded resins is essential in order to reduce energy consumption, reduce carbon emissions, and prevent environmental pollution. In this way, plastics made by recycling resins discarded after use by end consumers are called post-consumer Recycled (PCR) resins, and attempts and efforts to obtain PCR resins with desired purity and physical properties are continuously being performed.

Meanwhile, a polyvinylchloride (PVC) resin has hard or soft properties, excellent molding processability, and excellent price competitiveness, so the PVC has general-purpose utility. As a result, the PVC is applied to various application fields. However, the polyvinylchloride resin may not be used alone, but is used in combination with a plasticizer to realize various physical properties such as imparting flexibility to the polyvinylchloride resin and improving physical properties such as processability.

However, a phthalate-based plasticizer, which has been used as a plasticizer in the past, are harmful to the environment and human body and therefore, is subject to severe domestic and international regulations. When the phthalate-based plasticizer cannot be removed in order to recycle a polymer such as the conventional polyvinyl chloride resin using such a phthalate-based plasticizer, the phthalate-based plasticizer is difficult to commercialize. Therefore, recently, attempts have been made to effectively remove the phthalate-based plasticizer remaining in the recovered polymer in order to recycle the polymer using the phthalate-based plasticizer.

As part of this, in order to remove the additive such as the plasticizer from the recovered polymer, conventionally, a method for dissolving a recovered polymer using a solvent and then recrystallizing the dissolved polymer using an anti-solvent, a so-called solution recrystallization method, has been mainly used. However, in this case, the amount of solvent and anti-solvent used for dissolution and recrystallization was excessively large, and the physical properties of the regenerated polymer were also poor. Furthermore, as the amount of accompanying solvent increases, excessive costs were involved in equipment and devices.

Therefore, there is a demand for the development of a device that may remove the additive such as the plasticizer contained in the recovered polymer with high efficiency and at the same time minimize the amount of solvent used, and the development of a method for removal of an additive in a polymer using the same.

JP 2006009033 A and JP 4350756 B2 disclose an additive removal apparatus, comprising a barrel that provides an inner space and has a polymer inlet on one side and a polymer outlet on the other side; a screw that is provided in the inner space of the barrel and axially rotates; and a solvent discharge unit that is provided at one end portion of the barrel, wherein the barrel includes a swelling solvent inlet that is positioned between the polymer inlet and the polymer outlet and adjacent to the polymer inlet, and a shrinking solvent inlet that is positioned between the polymer inlet and the polymer outlet and adjacent to the polymer outlet.

### [Summary]

### [Technical Problem]

In order to solve the problems mentioned in the above background technology, the present invention provides a continuous treatment method capable of removing a plasticizer contained in a polymer with high efficiency for recycling the polymer.

### [Technical Solution]

According to the present invention, there is provided a method for removal of an additive including, preparing an additive removal apparatus, the additive removal apparatus comprising a barrel that provides an inner space and has a polymer inlet on one side and a polymer outlet on the other side;
a screw that is provided in the inner space of the barrel and axially rotates; and
a solvent discharge unit that is provided at one end portion of the barrel,
wherein the barrel includes a swelling solvent inlet that is positioned between the polymer inlet and the polymer outlet and adjacent to the polymer inlet, and a shrinking solvent inlet that is positioned between the polymer inlet and the polymer outlet and adjacent to the polymer outlet; supplying a polymer containing the additive to the polymer inlet, and supplying a swelling solvent and a shrinking solvent to the swelling solvent inlet and the shrinking solvent inlet, respectively, transferring the supplied polymer to the polymer outlet by axial rotation of the screw, swelling the polymer in a swelling zone from the polymer inlet to the swelling solvent inlet, and shrinking the polymer in a shrinking zone from the swelling solvent inlet to the shrinking solvent inlet.

### [Advantageous Effects]

According to the method of the present invention, it is possible to continuously extract additives in a polymer even with a small device size and a small amount of solvent used, and improve removal efficiency of additives.

In addition, according to the method for removal of an additive of the present invention, unlike the conventional dissolution recrystallization method, by immersing a swelling solvent into a polymer without dissolving the polymer recovered from a waste resin in a solvent to selectively diffuse and extract additives in the polymer, it is possible to remove the additive from the polymer. As a result, it is possible to improve economic efficiency by reducing the amount of solvent used and simplifying required equipment.

Then, in removing the swelling solvent in the swollen polymer by the immersion of the swelling solvent, it is possible to shrink the swollen polymer by applying a shrinking solvent to the swollen polymer, and thus, effectively reduce the solvent in the polymer and the residual amount of additives present in the solvent.

### [Brief Description of the Drawings]

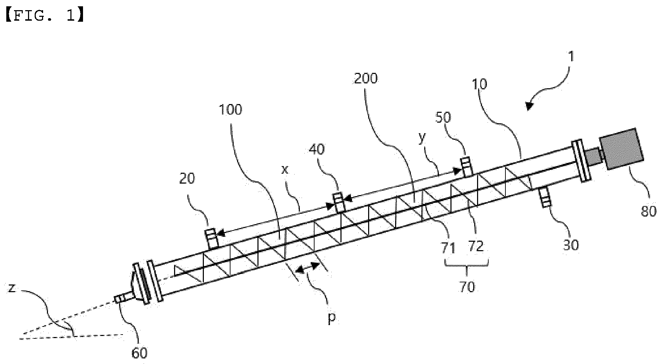

FIG. 1 is a longitudinal cross-sectional view illustrating an additive removal apparatus used according to an embodiment of the present invention.

### [Best Mode]

Terms and words used in the present specification and claims are not to be construed as a general or dictionary meaning but are to be construed as meaning and concepts meeting the technical ideas of the present invention based on a principle that the inventors can appropriately define the concepts of terms in order to describe their own inventions in best mode.

Hereinafter, the present invention will be described in more detail with reference to FIG. 1 to help the understanding of the present invention.

An additive removal apparatus 1 used according to an embodiment of the present invention may include a barrel 10 that provides an inner space and has a polymer inlet 20 on one side and a polymer outlet 30 on the other side, a screw 70 that is provided in the inner space of the barrel 10 and axially rotates, and a solvent discharge unit 60 that is provided at one end portion of the barrel 10, in which the barrel 10 includes a swelling solvent inlet 40 that is positioned between the polymer inlet 20 and the polymer outlet 30 and adjacent to the polymer inlet and a shrinking solvent inlet 50 that is positioned between the polymer inlet and the polymer outlet and adjacent to the polymer outlet.

First, the polymer is a polymer recovered from waste resin, and is a polymer obtained by pre-treating waste resin, and may be in particulate form. On the other hand, the waste resin may be recovered from various products or uses molded using the resin or its composition, regardless of whether it is hard or soft. In addition, the recovered polymer may be a single type of polymer or may be a resin composition blended with other resins.

The pretreatment means an integral process of treating waste resin with a polymer in a state suitable for being applied to the additive removal apparatus. For example, the pretreatment may be a process of first washing the waste resin with a solvent such as water to remove relatively large foreign substances such as dust, drying the waste resin, and grinding the waste resin into particles.

Specifically, the average particle diameter D50 of the polymer may be 0.1 mm or more and 2 mm or less. As the average particle diameter of the recovered polymer decreases, an immersion rate of an immersion solvent increases and an additive removal rate increases, but there is a disadvantage in that processing time increases in order to prepare a recovered polymer having a small average particle diameter.

The type of polymer suitable for application to the additive removal apparatus is not particularly limited, but when the additive removed by the additive removal apparatus is a plasticizer, the polymer may be polyvinyl chloride (PVC).

On the other hand, additives such as a plasticizer, a filler, a flame retardant, a stabilizer, a filling agent, a foaming agent, a viscosity lowering agent, colorants, and heat stabilizers may be used to impart desired physical properties to the resin in the product manufacturing process, such as such as during the polymerization of the polymer or during molding after polymerization, and the used additive remains in the resin prepared according to the additives. Therefore, the additive may be included even in the waste resin recovered from the product in order to recycle the resin.

In preparing a regenerated polymer from the polymer recovered from the waste resin, the reason why the additive should be properly removed is as follows.

First, when the additive remains in excess, it may be difficult to manufacture a regenerated polymer having good physical properties or the like. Due to the influence of the additive, physical properties such as the deformation of the regenerated polymer or the degradation in surface properties may be degraded, or color properties such as discoloration may be degraded.

Second, depending on the additives, there are additives whose use is recently regulated due to environmental and human harmfulness. That is, due to regulations and the like that did not exist at the time of product manufacturing, it is becoming more common to manufacture recycled polymers only when the additive to be regulated should be removed to a desired level or less from the recovered polymer.

For the above reasons, the additive that needs to be removed from the recovered polymer containing the additive may be mainly a plasticizer. Specifically, the plasticizer may be a phthalate-based plasticizer. More specifically, the phthalate-based plasticizer may be one or more of dioctylphthalate (DOP), dibutylphthalate (DBP), dioctylterephthalate (DOTP), diisononylphthalate (DINP), diisodecylphthalate (DIDP), di-(2-ethylhexyl) terephthalate (DEHTP), and butylbenzyl phthalate (BBP).

On the other hand, the method for removal of an additive is different from the method for dissolving a polymer itself using a conventional dissoluble solvent and then recrystallizing the polymer in that only the additive is selectively eluted while maintaining the form of the polymer. In this conventional dissolution recrystallization method, it is difficult to remove an additive such as a plasticizer that has good compatibility with a resin. In particular, in this case, since the use of an excessive amount of solvent (anti-solvent) is required, not only the cost of the solvent but also the cost of purifying the solvent is high, so there is a disadvantage in that the purification efficiency compared to the cost is low.

Therefore, the method for removal of an additive of the present invention first brings the polymer containing the additives into contact with the swelling solvent to immerse the swelling solvent into the polymer to swell the polymer, and at the same time diffuse the additives in the polymer into the swelling solvent to remove from the polymer. Subsequently, the content ratio of the solvent present in the polymer may be minimized by bringing the polymer immersed with the swelling solvent into contact with the shrinking solvent to shrink the polymer. That is, as the polymer in a swollen state is shrunk by the shrinking solvent, the swelling solvent containing the internal additives is discharged to the outside of the polymer as much as possible, thereby ultimately reducing the content of additives in the polymer.

Here, the term "immersion" means not only washing the additive (plasticizer) present on the surface of the recovered polymer by the immersion solvent, but also impregnating the immersion solvent into the recovered polymer through the diffusion and eluting the additive (plasticizer) therein.

Furthermore, provided is an optimal additive removal apparatus 1 that may continuously perform the method for removal of an additive to reduce the amount of swelling solvent and shrinking solvent used, thereby increasing economic efficiency and at the same time, improving the removal efficiency of the additives, specifically the plasticizer.

From this point of view, the barrel 10 is an element constituting a body of the additive removal apparatus 1, and may be a tubular shape that extends in a longitudinal direction and has an inner space. The barrel 10 may be made of a material that is not deformed by a solvent to be described later, and specifically may be a metal material or a glass material.

The inner space is a space in which the polymer supplied to the polymer inlet 20 is transferred to the polymer outlet 30 by the screw 70, and the solvent supplied to the swelling solvent inlet 40 and the shrinking solvent inlet 50 is transferred by gravity, and may mean a space in which the additive contained in the polymer is removed by swelling and shrinking the polymer.

Specifically, the barrel 10 may have the polymer inlet 20 on one side and the polymer outlet 30 on the other side. The polymer may be a polymer containing an additive, and the polymer may be supplied to the polymer inlet 20, so the additive therein may be removed through a process of bringing the polymer into sequential contact with the swelling solvent and shrinking solvent to be described later, and the polymer from which the additive is removed may be discharged through the polymer outlet 30.

On the other hand, the additive removal apparatus 1 may include the screw 70 that is provided in the inner space of the barrel 10 and axially rotates, and include a rotational force supply device 80 at the other end portion of the barrel 10 in order to apply a rotational force to the screw 70. Here, the other end portion may be an end portion adjacent to the polymer outlet 30 among end portions of the barrel 10.

The rotational force supply device 80 is for supplying a driving force for axial rotation to the screw 70 and may be a motor in detail.

Specifically, the screw 70 may include a shaft 71 that is connected to the rotational force supply device 80 and axially rotates and a plate 72 that is fixed to the outer circumferential surface of the shaft 71 and spirally extends along the longitudinal direction of the shaft 71. By the rotational force applied by the rotational force supply device 80, the plate 72 may rotate using the shaft 71 as a rotating shaft. Through this, the polymer supplied to the polymer inlet 20 is loaded on the plate 72 and may be continuously transferred to the polymer outlet 30 by the axial rotation of the screw 70.

Meanwhile, a supply flow rate (g/min) of the polymer supplied to the polymer inlet 20 may be determined by the relationship of a volume (cm³) of 1 pitch (p) of the screw, a bulk density (g/cm³) of the polymer supplied, and a revolutions per minute (RPM, min⁻¹) of the screw, and may specifically satisfy General Formula 1 below. [General Formula 1] 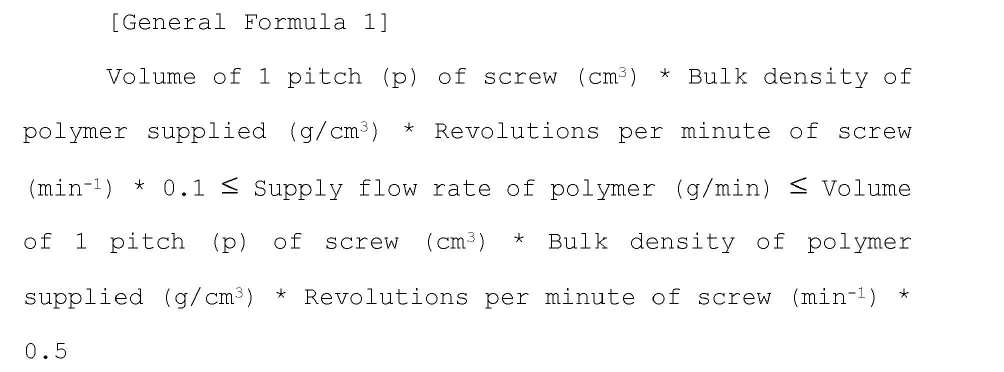 Volume of 1 pitch (p) of screw (cm3) * Bulk density of polymer supplied (g/cm3) * Revolutions per minute of screw (min-1) * 0.1 ≤ Supply flow rate of polymer (g/min) ≤ Volume of 1 pitch (p) of screw (cm3) * Bulk density of polymer supplied (g/cm3) * Revolutions per minute of screw (min-1) * 0.5

On the other hand, in the additive removal apparatus 1, the extension line of the rotational central axis of the screw 70, specifically, the extension line of the shaft 71 may be disposed inclined with respect to the ground. That is, a surface height of the polymer outlet 30 may be disposed higher than that of the polymer inlet 20. As a pedestal supporting the additive removal apparatus 1, the length of the pedestal supporting the polymer outlet 30 side is longer than the length of the pedestal supporting the polymer inlet 20 side, so an inclination angle z between the extension line of the central axis of rotation of the screw 70 and the ground may be implemented.

On the other hand, it is possible to transfer the swelling solvent and shrinking solvent introduced into the inner space of the barrel 10 by the inclination angle z between the extension line of the central axis of rotation of the screw 70 and the ground to the solvent discharge unit 60 by gravity and to prevent the introduced swelling solvent and shrinking solvent from flowing backward to the polymer outlet 30 and being lost.

Furthermore, the retention time of the swelling solvent and the shrinking solvent in the device and the contact time of the solvents with the polymer may be determined by controlling the inclination angle z formed between the extension line of the central axis of rotation of the screw 70 and the ground. Through this, the additives in the polymer may be removed more efficiently.

Specifically, the inclination angle z formed between the extension line of the rotation center axis of the screw 70 and the ground may be 5° to 30°. The inclination angle z is also related to the flow rates of the swelling solvent and the shrinking solvent to be supplied. When the inclination angle exceeds 30°, since the solvent supplied to the barrel 10 through the swelling solvent inlet 40 or the shrinking solvent inlet 50 is discharged without sufficiently staying in the inner space of the barrel, that is, since the solvent is discharged in an excessively short time even if the solvent has the ability to swell or shrink the polymer, there is a problem that the excessive solvent usage is required more than necessary, and furthermore, the amount of energy required in the purification process for the reuse of the solvent increases. Conversely, when the inclination angle is less than 5°, the possibility that the solvent supplied to the barrel is discharged to the polymer outlet 30 and lost increases, and the solvent that has reached adjacent to the solvent outlet, that is, the solvent in which the additive is concentrated, is not smoothly discharged to the solvent outlet, so the removal efficiency of the additives in the polymer may be reduced.

According to one embodiment of the present invention, the swelling solvent is supplied to the swelling solvent inlet 40, and the shrinking solvent is supplied to the shrinking solvent inlet 50.

Furthermore, the inner space of the barrel 10 may be functionally partitioned into a swelling zone 100 from the polymer inlet 20 to the swelling solvent inlet 40 and a shrinking zone from the swelling solvent inlet 40 to the shrinking solvent inlet 50. Specifically, the swelling zone 100 is a cross section of the barrel 10, and means a region from a cross section including the center of the polymer inlet 20 to a cross section including the center of the swelling solvent inlet 40, and the shrinking zone 200 means a region from a cross section including the center of the swelling solvent inlet 40 to a cross section including the center of the shrink solvent inlet 50.

First, the polymer containing the additive supplied through the polymer inlet 20 sequentially passes through the swelling zone 100 and the shrinking zone 200 while being transferred to the polymer discharge port 30 by the axial rotation of the screw 70.

A distance x from the polymer inlet 20 to the swelling solvent inlet 40 may be the length of the swelling zone 100, and a distance y from the swelling solvent inlet 40 to the shrinking solvent inlet 50 may be the length of the shrinking zone 200. A ratio x/y of the distance x from the polymer inlet 20 to the swelling solvent inlet 40 and the distance y from the swelling solvent inlet 40 to the shrinking solvent inlet 50 may be 0.1 to 60, specifically 1 to 30. When the ratio x/y is less than 0.1, the retention time of the polymer in the shrinking zone becomes longer than necessary, and the economic efficiency of the process may decrease, and when the ratio x/y is greater than 60, the retention time of the polymer in the shrinking zone becomes shorter than necessary, so there is a problem in that it is difficult for the polymer in the swollen state to be sufficiently shrunk.

On the other hand, in the swelling zone 100, the polymer containing the additive comes into contact with the swelling solvent, so the swelling solvent may be impregnated into the inside of the polymer, and the polymer may swell while maintaining its unique molecular structure. The additive contained in the polymer is diffused by the impregnated immersion solvent and eluted out of the recovered polymer, and the additives in the polymer may be removed.

For the efficient removal of the additive from the polymer, it is important to select the swelling solvent used for the swelling of the polymer. First, the swelling solvent should be able to be uniformly immersed into the polymer particles at high speed, and the maximum amount of additive contained in the polymer should be able to be eluted into the swelling solvent immersed in the polymer. Therefore, the swelling solvent should be selected considering the type of polymer and the type of additive to be removed.

From this point of view, when the additive is the phthalate-based plasticizer, the swelling solvent may be one or more of cyclohexanone, cyclopentanone, N, N-dimethyl acetamide, tetrahydrofuran, pyridine, 3-pentanone, 2-pentanone, dimethylformamide, methyl ethyl ketone, dichloromethane, 4-methylpentan-2-one, nitrobenzene, 1,4-dioxane, 1,1,2,2-tetrachloroethane, acetone, ethyl acetate, chloroform, and dimethyl sulfoxide, and specifically, may be methyl ethyl ketone. In the case of the solvent, it may be easily impregnated into the polymer and preferably used because it has an excellent ability to elute the additives in the polymer, for example, the phthalate-based plasticizer.

As such, for sufficient immersion of the swelling solvent into the polymer in the swelling zone 100 and smooth elution of the internal additives due to the swelling of the polymer, the supply flow rate (cm³/min) of the swelling solvent supplied to the swelling solvent inlet 40 may be determined according to the supply flow rate of the polymer and the bulk density of the polymer supplied. Specifically, the following General Formula 2 may be satisfied. [General Formula 2] 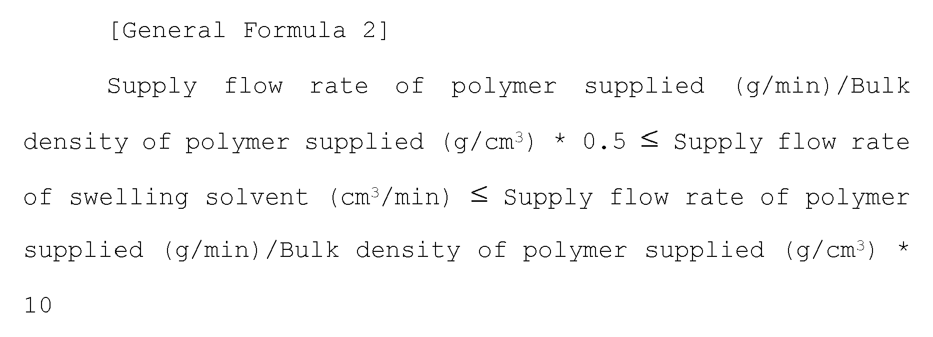 Supply flow rate of polymer supplied (g/min)/Bulk density of polymer supplied (g/cm3) * 0.5 ≤ Supply flow rate of swelling solvent (cm3/min) ≤ Supply flow rate of polymer supplied (g/min)/Bulk density of polymer supplied (g/cm3) * 10

That is, when the supply volume flow rate (cm³/min) of the swelling solvent/supply volume flow rate (cm³/min) of the polymer is greater than or equal to 0.5, the sufficient swelling of the polymer is possible and the residual additives in the polymer may be smoothly removed. On the other hand, since the use of unnecessary solvent may be reduced when the supply volume flow rate of the swelling solvent (cm³/min)/supply volume flow rate of the polymer (cm³/min) is 10 or less, it is possible to reduce the purification cost or the like due to the excessive use of solvent, and thus, improve the economic efficiency of the process.

Meanwhile, the retention time of the polymer in the swelling zone 100 may satisfy the following General Formula 3 in relation to a value represented by an average particle diameter D50 (mm) of the polymer. [General Formula 3] 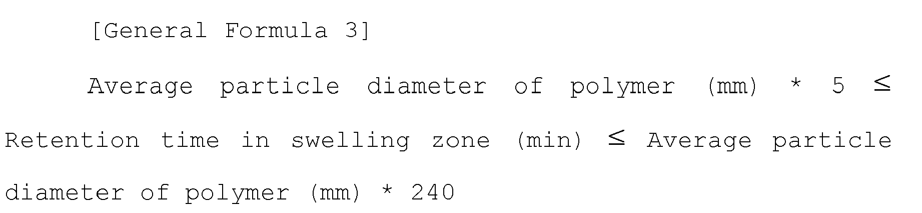 Average particle diameter of polymer (mm) * 5 ≤ Retention time in swelling zone (min) ≤ Average particle diameter of polymer (mm) * 240

That is, when the polymer stays in the swelling zone 100 for a longer time than [a numerical value represented by the average particle diameter of the polymer * 5], the swelling solvent is immersed into the polymer, so the additive may be sufficiently eluted. On the other hand, when the retention time is longer than [a numerical value represented by the average particle diameter of the polymer * 240], the economic efficiency of the process may be reduced. Specifically, when the revolutions per minute (RPM) of the screw is excessively lowered in order to increase the retention time, the yield of the polymer from which the additives are removed per unit time is reduced, or the length of the swelling zone 100 is increased to increase the retention time. In this case, the size of the apparatus may increase.

Meanwhile, a mixed solvent of the swelling solvent and the shrinking solvent may exist in the swelling zone 100. That is, since the shrinking solvent supplied to the shrinking solvent inlet 50 passes through the shrinking zone 200 and the swelling zone 100 and is discharged to the solvent discharge unit 60, the swelling solvent and the shrinking solvent exist in the swelling zone 100 together.

In the swelling zone 100, when the shrinkage solvent is excessively large compared to the swelling solvent, the swelling of the polymer by the swelling solvent and the solvent immersion may be reduced, so the flow rates of the swelling solvent and the shrinkage solvent in the swelling zone 100 should be controlled to be an appropriate ratio. On the other hand, since each of the flow rates of the swelling solvent and the shrinking solvent in the swelling zone 100 are eventually determined based on the flow rate of the swelling solvent supplied to the swelling solvent inlet 40 and the flow rate of the shrinking solvent supplied to the shrink solvent inlet 50, it may be important to properly control their flow rate ratio for the smooth immersion of the swelling solvent and the swelling of the polymer.

In this regard, a flow rate ratio of the volume flow rate of the shrinking solvent supplied to the shrinking solvent inlet to the volume flow rate of the swelling solvent supplied to the swelling solvent inlet may be 30 vol% to 300 vol%. When the supply volume flow rate of the shrinking solvent is supplied at 300 vol% or less of the supply volume flow rate of the swelling solvent, that is, when the swelling solvent exists in the swelling zone 100 in an amount of 3 times or more of the shrinking solvent, the additive elution function may not be reduced due to the swelling of the polymer of the swelling solvent. On the other hand, considering the function of the shrinking solvent in the shrinking zone 200 and the consequent removal efficiency of the additives in the polymer, it is necessary to maintain the supply volume flow rate of the shrinking solvent above a certain level, so, when the flow rate ratio of the volume flow rate of the shrinking solvent to the volume flow rate of the swelling solvent is less than 30 vol%, it may be difficult to smoothly implement the polymer shrinking function in the shrinking zone due to insufficient supply of the shrinking solvent.

Meanwhile, the polymer swollen by the swelling solvent may be transferred to the shrinking zone 200 in the barrel 10. The polymer swollen in the shrinking zone 200 may come into contact with the shrinking solvent. Specifically, the polymer transferred from the swelling zone 100 to the shrinking zone 200 is immersed with a swelling solvent in which additives are eluted, and when dried without removing the swelling solvent in the swollen polymer, since the eluted plasticizer remains inside the regenerated polymer as it is, the plasticizer removal efficiency decreases. Therefore, it is important to remove the swelling solvent inside the swollen polymer. According to the present invention, the content ratio of solvent and the content of plasticizer present in the swelling polymer may be minimized by shrinking the swelling polymer by chemical means using the shrinking solvent.

Unlike the swelling solvent, the shrinking solvent is preferably a solvent having a low degree of swelling of the polymer, and at the same time, when the additive is the phthalate-based plasticizer, and preferably a solvent having a high degree of dissolving the phthalate-based plasticizer. From this point of view, when the additive is the phthalate-based plasticizer, the shrinking solvent is one or more of ethanol, toluene, cyclohexanol, isopropyl alcohol, benzene, cyclohexane, 1-pentanol, 1-butanol, 1-propanol, hexane, and diethyl ether, and specifically, may be isopropyl alcohol. Such a shrinking solvent can not only efficiently shrink the swelling polymer, but also has an excellent degree of dissolving the phthalate-based plasticizer, so the plasticizer present inside the polymer may be easily removed from the polymer during the shrinkage of the swelling polymer.

In order to easily shrink the swollen polymer by the shrinking solvent in the shrinking zone 200 and smoothly remove the swelling solvent (and additives included therein) in the swollen polymer accordingly, the supply flow rate of the shrink solvent supplied through the shrink solvent inlet 50 may be determined according to the supply flow rate of the polymer and the bulk density of the polymer supplied. Specifically, the following General Formula 4 may be satisfied. [General Formula 4] 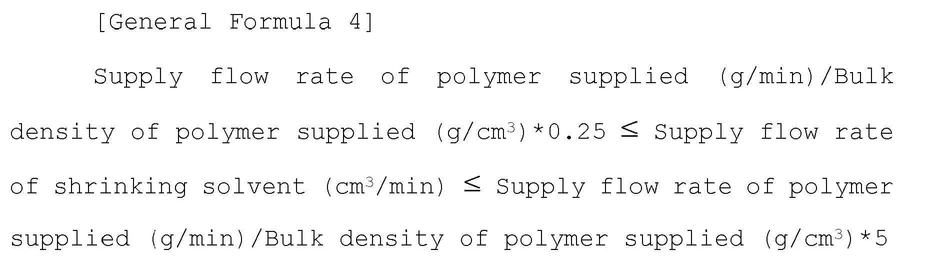 Supply flow rate of polymer supplied (g/min)/Bulk density of polymer supplied (g/cm3)*0.25 ≤ Supply flow rate of shrinking solvent (cm3/min) ≤ Supply flow rate of polymer supplied (g/min)/Bulk density of polymer supplied (g/cm3)*5

In addition, the retention time of the polymer in the shrinking zone 200 may be 0.5 to 10 minutes. When the retention time of the polymer in the shrinking zone 200 is short, less than 0.5 minutes, the shrinking solvent may not sufficiently impregnate deep into the polymer, so the swelling polymer does not shrink smoothly and the removal efficiency of the additives may decrease. In addition, when the retention time of the polymer in the shrinking zone 200 is 10 minutes or more, the retention time becomes longer than necessary, so it is not economical in terms of solvent usage and apparatus size.

According to one embodiment of the present invention, the polymer shrunk through the shrinking zone 200 may be discharged to the outside of the additive removal apparatus 1 through the polymer outlet 30. The discharged polymer may be subjected to a drying process to remove the swelling solvent and shrinkage solvent remaining in the polymer. The dryer in which the drying process is performed may be, for example, a paddle dryer, a floating bed dryer, a vacuum dryer, or a devolatilization extruder.

Meanwhile, according to an embodiment of the present invention, the swelling solvent and the shrinking solvent may be discharged through the solvent discharge unit 60.

The solvent discharge unit 60 may be coupled to the barrel 10 at one end of the barrel 10, and the solvent discharge unit 60 may include a solvent outlet. The solvent discharge unit 60 may be in a form capable of being separated from the one end of the barrel 10 for cleaning the inside of the barrel 10, etc.

The solvent discharged through the solvent discharge unit 60 may include a swelling solvent, a shrinking solvent, and additives dissolved therein. Accordingly, a purification process of separating the swelling solvent, the shrinking solvent, and the additives may be performed on the discharged solvent, and it is also possible to reuse the respective solvents and additives accordingly.

Hereinafter, the present invention will be described in more detail with through Examples.

### Examples

### Example 1

First, the additive removal apparatus 1 as illustrated in FIG. 1 was prepared. Specifically, the additive removal apparatus includes a barrel 10 having an inner diameter of 6 cm having a polymer inlet 20 on one side and a polymer outlet 30 on the other side, a motor 80 on the other end portion of the barrel, and a screw 70 connected to the motor provided in the barrel. The additive removal apparatus includes a swelling solvent inlet 40 and a shrinking solvent inlet 50 between the polymer inlet and the polymer outlet. Here, a ratio x/y of a distance x from the polymer inlet to the swelling solvent inlet and a distance y from the swelling solvent inlet to the shrinking solvent inlet is 4.

The additive removal apparatus was mounted on a pedestal of the additive removal apparatus, and an inclination formed by an extension line of a central axis of rotation of the screw and a ground was adjusted to 15°.

Subsequently, a polymer powder sample including a PVC recovery polymer (D50: 200 µm) containing 14.3 wt% of a phthalate-based plasticizer was prepared, and methyl ethyl ketone (MEK) as a swelling solvent and isopropyl alcohol (IPA) as a shrinking solvent were prepared. Subsequently, the MEK was supplied to the swelling solvent inlet 40 at a volume flow rate of 15.5 cm³/min (0.75 kg/hr as a mass flow rate), and IPA was supplied to the shrinking solvent inlet 50 at a volume flow rate of 10.6 cm³/min (0.5 kg/hr as a mass flow rate), respectively, and after confirming that a steady state was reached, a polymer powder sample was supplied to the polymer inlet 20 at a mass flow rate of 4.2 g/min (=0.25 kg/hr). Meanwhile, the polymer powder sample sequentially passed through the swelling zone 100 and the shrinking zone 200 at a rotational speed of the screw of 1 rpm, and then discharged through the polymer outlet 30. In this case, the retention time of the polymer in the swelling zone was 24 minutes, and the retention time in the shrinking zone was 6 minutes.

0.5 g of the PVC polymer discharged through the polymer outlet 30 was sampled and subjected to gas chromatograph flame ionization detection analysis (GC-FID) to calculate the content of residual phthalate-based plasticizer in the sample. Here, the gas chromatograph flame ionization detection analysis (GC-FID) device used Agilent's 7890A GC system. As a result, the content of residual plasticizer was 100 ppm.

### Example 2

Compared to Example 1, in Example 2, the plasticizer in the PVC polymer was removed using the same device and method as in Example 1 except that the MEK was supplied to the swelling solvent inlet 40 at a volume flow rate of 7.5 cm³/min (0.375 kg/hr as a mass flow rate), and IPA was supplied to the shrinking solvent inlet 50 at a volume flow rate of 2.7 cm³/min (0.125 kg/hr as a mass flow rate), respectively.

A result of measuring the residual plasticizer concentration in the same manner as in Example 1 for the discharged PVC polymer was 250 ppm.

### Comparative Example 1

Compared to Example 1, in Comparative Example 1, the plasticizer in the PVC polymer was removed using the same apparatus and method as in Example 1 except that no solvent was supplied to the swelling solvent inlet 40, MEK, which is a swelling solvent, was supplied only through the shrinking solvent inlet 50 at 25.9 cm³/min (1.25 kg/hr as a mass flow rate), and the retention time of the polymer in the apparatus was set to 30 minutes.

A result of measuring the residual plasticizer concentration in the same manner as in Example 1 for the discharged PVC polymer was 4,200 ppm.

### Comparative Example 2

Compared to Comparative Example 1, in Comparative Example 2, the plasticizer in the PVC polymer was removed using the same apparatus and method as in Comparative Example 1 except that IPA, which is the shrinking solvent, was supplied only to the shrinking solvent inlet 50 at 26.5 cm³/min (1.25 kg/hr as a mass flow rate).

A result of measuring the residual plasticizer concentration in the same manner as in Example 1 for the discharged PVC polymer was 62,000 ppm.

### Comparative Example 3

Compared to Comparative Example 1, Comparative Example 3 removed the plasticizer in the PVC polymer using the same apparatus and method as in Comparative Example 1 except that a mixed solvent in which MEK, the swelling solvent and IPA, the shrinking solvent were mixed at a weight ratio of 1:1, was supplied only to the shrinking solvent inlet 50 at 26.0 cm³/min (1.25 kg/hr as a mass flow rate).

A result of measuring the residual plasticizer concentration in the same manner as in Example 1 for the discharged PVC polymer was 1,400 ppm.

From the above results, it was possible to efficiently remove the additives in the polymer in a continuous manner using the additive removal apparatus of the present invention. Referring to Examples 1 and 2, it can be confirmed that high additive removal efficiency may be achieved when a solvent for swelling the polymer and a solvent for shrinking the polymer are introduced into the swelling solvent inlet and the shrinking solvent inlet provided in the additive removal apparatus, respectively. On the other hand, when only one of the swelling solvent or the shrinking solvent was used at the same flow rate (Comparative Examples 1 and 2), or when a mixed solvent of these was used even if the same solvent was used at the same flow rate, it was difficult to achieve the desired plasticizer removal efficiency (Comparative Example 3).

## Claims

1. A method for removal of an additive, comprising:
preparing an additive removal apparatus (1), the additive removal apparatus comprising a barrel (10) that provides an inner space and has a polymer inlet (20) on one side and a polymer outlet (30) on the other side;
a screw (70) that is provided in the inner space of the barrel (10) and axially rotates; and
a solvent discharge unit (60) that is provided at one end portion of the barrel (10),
wherein the barrel (10) includes a swelling solvent inlet (40) that is positioned between the polymer inlet (20) and the polymer outlet (30) and adjacent to the polymer inlet (20), and a shrinking solvent inlet (50) that is positioned between the polymer inlet (20) and the polymer outlet (30) and adjacent to the polymer outlet (30);
supplying a polymer containing an additive to the polymer inlet (20), and supplying a swelling solvent and a shrinking solvent to the swelling solvent inlet (40) and the shrinking solvent inlet (50), respectively;
transferring the supplied polymer to the polymer outlet (30) by axial rotation of the screw (70);
swelling the polymer in a swelling zone (100) from the polymer inlet (20) to the swelling solvent inlet (40); and
shrinking the polymer in a shrinking zone (200) from the swelling solvent inlet (40) to the shrinking solvent inlet (50).

2. The method of claim 1, wherein the additive is a phthalate-based plasticizer that is one or more of dioctylphthalate (DOP), dibutylphthalate (DBP), dioctylterephthalate (DOTP), diisononylphthalate (DINP), diisodecylphthalate (DIDP), di-(2-ethylhexyl) terephthalate (DEHTP), and butylbenzyl phthalate (BBP).

3. The method of claim 1, wherein the polymer is polyvinyl chloride (PVC).

4. The method of claim 1, wherein the swelling solvent is one or more of cyclohexanone, cyclopentanone, N, N-dimethyl acetamide, tetrahydrofuran, pyridine, 3-pentanone, 2-pentanone, dimethylformamide, methyl ethyl ketone, dichloromethane, 4-methylpentan-2-one, nitrobenzene, 1,4-dioxane, 1,1,2,2-tetrachloroethane, acetone, ethyl acetate, chloroform, and dimethyl sulfoxide.

5. The method of claim 1, wherein the shrinking solvent is one or more of ethanol, toluene, cyclohexanol, isopropyl alcohol, benzene, cyclohexane, 1-pentanol, 1-butanol, 1-propanol, hexane, and diethyl ether.

6. The method of claim 1, wherein a retention time of the polymer in a swelling zone (100) and an average particle diameter D50 of the polymer satisfy the following General Formula 3. [General Formula 3] 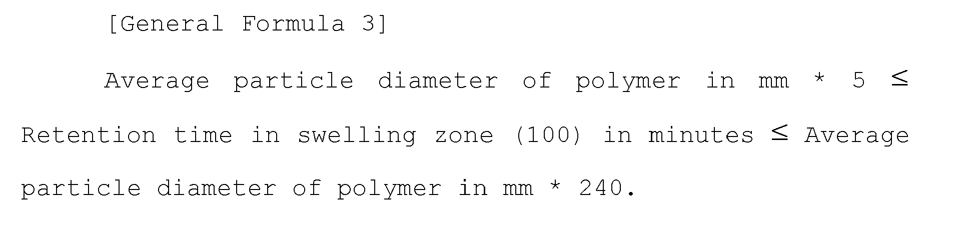 Average particle diameter of polymer in mm * 5 ≤ Retention time in swelling zone (100) in minutes ≤ Average particle diameter of polymer in mm * 240.

7. The method of claim 1, wherein a flow rate ratio of a flow rate of the shrinking solvent supplied to the shrinking solvent inlet (50) to a flow rate of the swelling solvent supplied to the swelling solvent inlet (40) is 30 vol% to 300 vol%.

8. The method of claim 1, wherein the retention time of the polymer in the shrinking zone (200) is 0.5 to 10 minutes.

9. The method of claim 1, wherein the supplied swelling solvent and shrinking solvent are transferred to the solvent discharge unit (60) by gravity and discharged.

## Patentansprüche

1. Verfahren zum Entfernen eines Additivs, umfassend:
Vorbereiten einer Additiventfernungsvorrichtung (1), wobei die Additiventfernungsvorrichtung einen Zylinder (10) umfasst, der einen Innenraum bereitstellt und einen Polymereinlass (20) auf einer Seite und einen Polymerauslass (30) auf der anderen Seite aufweist;
eine Schnecke (70), die in dem Innenraum des Zylinders (10) bereitgestellt ist und sich axial dreht; und
eine Lösungsmittelabgabeeinheit (60), die an einem Endabschnitt des Zylinders (10) bereitgestellt ist,
wobei der Zylinder (10) einen Quelllösungsmitteleinlass (40), der zwischen dem Polymereinlass (20) und dem Polymerauslass (30) und benachbart zu dem Polymereinlass (20) positioniert ist, und einen Schrumpflösungsmitteleinlass (50), der zwischen dem Polymereinlass (20) und dem Polymerauslass (30) und benachbart zu dem Polymerauslass (30) positioniert ist, beinhaltet;
Zuführen eines Polymers, das ein Additiv enthält, zu dem Polymereinlass (20) und Zuführen eines Quelllösungsmittels bzw. eines Schrumpflösungsmittels zu dem Quelllösungsmitteleinlass (40) und dem Schrumpflösungsmitteleinlass (50);
Übertragen des zugeführten Polymers zu dem Polymerauslass (30) durch axiale Drehung der Schnecke (70);
Quellen des Polymers in einer Quellzone (100) von dem Polymereinlass (20) zu dem Quelllösungsmitteleinlass (40); und
Schrumpfen des Polymers in einer Schrumpfzone (200) von dem Quelllösungsmitteleinlass (40) zu dem Schrumpflösungsmitteleinlass (50).

2. Verfahren nach Anspruch 1, wobei das Additiv ein Weichmacher auf Phthalatbasis ist, der eines oder mehrere von Dioctylphthalat (DOP), Dibutylphthalat (DBP), Dioctylterephthalat (DOTP), Diisononylphthalat (DINP), Diisodecylphthalat (DIDP), Di-(2-ethylhexyl)terephthalat (DEHTP) und Butylbenzylphthalat (BBP) ist.

3. Verfahren nach Anspruch 1, wobei das Polymer Polyvinylchlorid (PVC) ist.

4. Verfahren nach Anspruch 1, wobei das Quelllösungsmittel eines oder mehrere von Cyclohexanon, Cyclopentanon, N,N-Dimethylacetamid, Tetrahydrofuran, Pyridin, 3-Pentanon, 2-Pentanon, Dimethylformamid, Methylethylketon, Dichlormethan, 4-Methylpentan-2-on, Nitrobenzol, 1,4-Dioxan, 1,1,2,2-Tetrachlorethan, Aceton, Ethylacetat, Chloroform und Dimethylsulfoxid ist.

5. Verfahren nach Anspruch 1, wobei das Schrumpflösungsmittel eines oder mehrere von Ethanol, Toluol, Cyclohexanol, Isopropylalkohol, Benzol, Cyclohexan, 1-Pentanol, 1-Butanol, 1-Propanol, Hexan und Diethylether ist.

6. Verfahren nach Anspruch 1, wobei eine Retentionszeit des Polymers in einer Quellzone (100) und ein durchschnittlicher Teilchendurchmesser D50 des Polymers die folgende allgemeine Formel 3 erfüllen. [Allgemeine Formel 3] 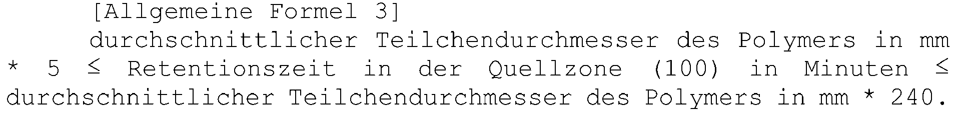 durchschnittlicher Teilchendurchmesser des Polymers in mm * 5 ≤ Retentionszeit in der Quellzone (100) in Minuten ≤ durchschnittlicher Teilchendurchmesser des Polymers in mm * 240.

7. Verfahren nach Anspruch 1, wobei ein Strömungsratenverhältnis einer Strömungsrate des dem Schrumpflösungsmitteleinlass (50) zugeführten Schrumpflösungsmittels zu einer Strömungsrate des dem Quelllösungsmitteleinlass (40) zugeführten Quelllösungsmittels 30 Vol.-% bis 300 Vol.-% beträgt.

8. Verfahren nach Anspruch 1, wobei die Retentionszeit des Polymers in der Schrumpfzone (200) 0,5 bis 10 Minuten beträgt.

9. Verfahren nach Anspruch 1, wobei das zugeführte Quelllösungsmittel und Schrumpflösungsmittel durch Schwerkraft zu der Lösungsmittelabgabeeinheit (60) übertragen und abgegeben werden.

## Revendications

1. Procédé d'élimination d'un additif comprenant :
la préparation d'un appareil d'élimination d'un additif (1), l'appareil d'élimination d'un additif comprenant un barillet (10) qui fournit un espace interne et qui est doté d'une entrée d'un polymère (20) d'un côté et d'une sortie du polymère (30) de l'autre côté ;
une vis (70) qui est fournie dans l'espace interne du barillet (10) et qui tourne axialement ; et
une unité de distribution de solvants (60) qui est située dans une partie d'extrémité du barillet (10),
où le barillet (10) inclut une entrée d'un solvant de gonflement (40) qui est positionnée entre l'entrée du polymère (20) et la sortie du polymère (30) et qui est adjacente à l'entrée du polymère (20), et une entrée d'un solvant de contraction (50) qui est positionnée entre l'entrée du polymère (20) et la sortie du polymère (30) et qui est adjacente à la sortie du polymère (30) ;
l'introduction d'un polymère contenant un additif dans l'entrée du polymère (20) et l'introduction d'un solvant de gonflement et d'un solvant de contraction dans l'entrée du solvant de gonflement (40) et l'entrée du solvant de contraction (50), respectivement ;
le transfert du polymère introduit vers la sortie du polymère (30) sous l'effet de la rotation axiale de la vis (70) ;
le gonflement du polymère dans une zone de gonflement (100) qui va de l'entrée du polymère (20) à l'entrée du solvant de gonflement (40) ; et
la contraction du polymère dans une zone de contraction (200) qui va de l'entrée du solvant de gonflement (40) à l'entrée du solvant de contraction (50).

2. Procédé de la revendication 1, où l'additif est un plastifiant à base d'un phtalate qui est un ou plusieurs des suivants : phtalate de dioctyle (DOP), phtalate de dibutyle (DBP), téréphtalate de dioctyle (DOTP), phtalate de diisononyle (DINP), phtalate de diisodécyle (DIDP), téréphtalate de di(2-éthylhexyle) (DEHTP) et phtalate de butylbenzyle (BBP).

3. Procédé de la revendication 1, où le polymère est le poly(chlorure de vinyle) (PVC).

4. Procédé de la revendication 1, où le solvant de gonflement est un ou plusieurs des suivants : cyclohexanone, cyclopentanone, N,N-diméthylacétamide, tétrahydrofurane, pyridine, 3-pentanone, 2-pentanone, diméthylformamide, méthyléthylcétone, dichlorométhane, 4-méthylpentan-2-one, nitrobenzène, 1,4-dioxane, 1,1,2,2-tétrachloroéthane, acétone, acétate d'éthyle, chloroforme et diméthylsulfoxyde.

5. Procédé de la revendication 1, où le solvant de contraction est un ou plusieurs des suivants : éthanol, toluène, cyclohexanol, alcool isopropylique, benzène, cyclohexane, 1-pentanol, 1-butanol, 1-propanol, hexane et éther diéthylique.

6. Procédé de la revendication 1, où un temps de rétention du polymère dans une zone de gonflement (100) et un diamètre particulaire moyen D50 du polymère satisfont la Formule générale 3 suivante. [Formule générale 3] 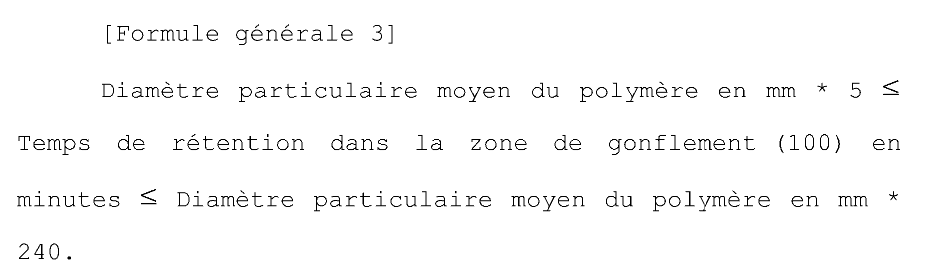 Diamètre particulaire moyen du polymère en mm * 5 ≤ Temps de rétention dans la zone de gonflement (100) en minutes ≤ Diamètre particulaire moyen du polymère en mm * 240.

7. Procédé de la revendication 1, où un rapport entre un débit du solvant de contraction introduit dans l'entrée du solvant de contraction (50) et un débit du solvant de gonflement introduit dans l'entrée du solvant de gonflement (40) va de 30 % en volume à 300 % en volume.

8. Procédé de la revendication 1, où le temps de rétention du polymère dans la zone de contraction (200) va de 0,5 à 10 minutes.

9. Procédé de la revendication 1, où le solvant de gonflement et le solvant de contraction introduits sont transférés à l'unité de distribution de solvants (60) sous l'effet de la pesanteur puis libérés.
